# EUROPEAN PATENT APPLICATION

(11) **EP 1 304 263 A2**
(43) Date of publication of application: **23.04.2003**
(21) Application number: 02078342.9
(22) Date of filing: 12.08.2002
(51) Int. Cl.: B60Q 7/00

(54) **Foldable traffic signal signalling incidents and provided with luminous components**

(30) Priority: 17.10.2001 US 981559
(71) Applicant: Gonzalez Serrano, Martin Blas, 28006 Madrid (ES)
(72) Inventor: Gonzalez Serrano, Martin Blas, 28006 Madrid (ES)
(74) Representative: Lahidalga de Careaga, Jose Luis

(57) **Abstract**

A foldable traffic signal, signalling incidents and provided with luminous components constructed from three parts with a surface provided with catadioptric components, formed by the union of three sides (triangle), and with several electroboscopic lamps on the vertices of the triangle. These lamps are supplied by batteries incorporated in hermetic boxes.

## Description

### OBJECT OF THE INVENTION

The present specification refers to the a Utility Model application, related to a foldable traffic signal, signalling incidents and provided with luminous components, whose purpose allows its display from a distance considerably greater than those existing between the point where the signal itself indicating a breakdown or similar incident on the roadway is located, until a distant point from the road along which a vehicle circulates towards the place where the signal is located, the latter having electroboscopic luminous points, fed by electric energy coming from batteries incorporated in hermetically sealed boxes, it also being possible to incorporate a solar energy cell into the signal, by which the batteries are recharged and in turn, supply the luminous signal themselves.

### FIELD OF THE INVENTION

This invention is applicable to the industry dedicated to the manufacture of traffic signalling components.

### BACKGROUND OF THE INVENTION

The applicant is aware of the current existence of a plurality of fixed signals indicating, prohibiting and recommending a vehicle driver of specific incidents, characteristics and conditions of the road along which the vehicle circulates.

All these signals are of the fixed type, having specific characteristics, some of which incorporate luminous components.

Likewise, the applicant is aware of signals indicating incidents that may occur during the circulation of a vehicle along a road. Currently, said signals are compulsory for vehicle drivers and should always be carried inside the vehicle with the purpose of previously indicating and then compulsorily stopping a vehicle due to breakdown or accident.

These red triangular signals with a surface similar to that of a reflecting catadioptric are installed at a distance regulated by law, with the purpose that vehicle drivers approaching the point where the vehicle has stopped, due to a breakdown or an incident, pays more attention to the existence of said vehicle.

Initially and before their obliged compliance, these signals were of a metal with the external surface of one of its faces painted in fluorescent or phosphorescent red paint activated by the incidence of the light beam from a vehicle's head lights, but currently, these signals are manufactured in plastic with a surface having a catadioptric coating and having the possibility of being folded, to reduce their volume and having in their lower part a supporting pedestal stand of many types.

It has been proved that none of the signals of obligatory use have their own luminous components, that is, they count with electroboscopic or similar light points which remotely inform of the existence of a parked vehicle.

As a result of these signals not having any light source, they are only seen when the light beam of vehicle head lamps incide more or less directly over them.

At night time it would be very convenient to have a signal having luminous points in order to inform the vehicle circulating towards the zone where the broken down vehicle is parked, with the purpose of previously warning its driver of its situation.

However, the applicant has no knowledge of the current existence of an invention having ideal signalling characteristics.

### DESCRIPTION OF THE INVENTION

The foldable traffic signal signalling incidents and having the luminous components proposed by the invention, is configured as an evident novelty within its field of application, on combining within its context the characteristics of permitting its action both during the day and night, implemented with luminous points which are electroboscopic, that is, they project alternative flashes with the purpose of incorporating a greater display from the point where the time signal is situated and as a result, previously indicate the point where the vehicle is located due to anomalous causes.

More specifically, the foldable traffic signal signalling incidents and provided with luminous components, object of the invention, is constructed from three equal parts which are articulated to each other, with the object of forming a triangle when assembled, that may be placed vertically due to the existence of support legs in its lower part, which are anti-tilting, on having an appropriate support surface in itself, an equilateral triangle emerging from its upper area, consisting of plastic parts with a catadioptric surface.

Matching with the vertices of the equilateral triangle, three luminous points of an electroboscopic nature have been incorporated, supplied by a battery located on the rear part of each one of the vertices, totally hermetic, allowing the incorporation of a small solar cell to capture energy and enhance the charging of batteries which are used to provide the electroboscopic luminous components with the relevant amount of energy.

When requiring their use, the driver of the broken down vehicle following the legal prescriptions will locate one of the signals at a distance determined in the front part and rear part of the vehicle, it being possible for the luminous components to operate if the vehicles parked at a time of little visibility, such as dusk, dawn, twilight, or in any cloudy or rainy weather.

If the signals are situated on a day of normal visibility, the electroboscopic points generating light flashes are not required, although it is always recommended to use them to enhance the warning coming from the foldable traffic signal even more.

### DESCRIPTION OF THE DRAWINGS

To complete the description being made, and to provide a greater understanding of the features of the invention, this specification is accompanied by a set of drawings which, with an illustrative and non-limiting character show the following:
Figure 1 corresponds to a front elevation view of the object of the invention.
Figure 2 shows a view in the assembly stage of the object shown in figure 1, corresponding to a foldable traffic signal, signalling incidents and provided with luminous components.
Figure 3 shows a side elevation view of the object shown in the previous figures.

### PREFERRED EMBODIMENT OF THE INVENTION

In the light of these figures, it may be observed how the foldable traffic signal (1) signalling incidents and provided with luminous components (3), consists of three parts (2) joined or articulated to each other with the purpose of permitting their volume, forming an equilateral triangle, having anti-tilting support legs (5), the sides (2) having over their external surface, the quality of being configured as reflexive catadioptrics enhancing vision of the triangle (1) itself.

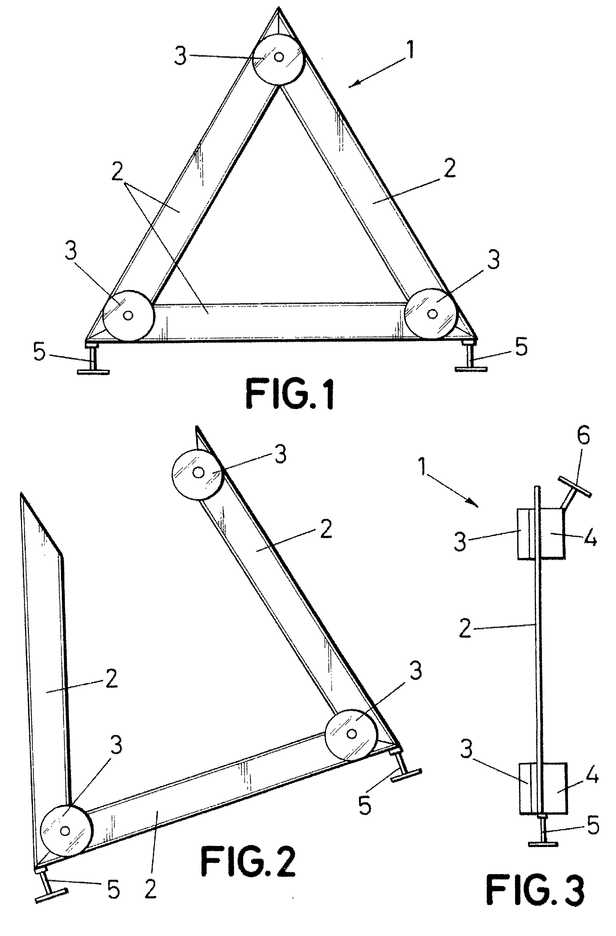

Matching the three vertices of the equilateral triangle, duly assembled as shown in figure 1, there are three electroboscopic lamps (3) that may be seen on the outside or rear face which are supplied by batteries incorporated in hermetic boxes (4) or batteries likewise incorporated in the boxes (4) configured as hermetic protection boxes which, manage to feed the lamps (3), the batteries themselves being supplied thanks to the existence of a solar cell (6) which captures photovoltaic energy, supplying or enhancing the charge of the batteries located inside the hermetic boxes marked with (4).

The points constituted by the electroboscopic lamps (3) generate intermittent flashes.

It is not considered necessary to extend this description any further for any expert in the matter to understand the scope of the invention and the advantages it provides.

The materials, shape, size and arrangement of the components may be changed provided this does not involve an alteration of the scope of the invention.

The terms in which this specification has been described should always be taken in the widest and non-limiting sense.

## Claims

1. A foldable traffic signal, signalling incidents and provided with luminous components, of the type constructed from three parts (2) of a plastic material, with a surface provided with catadioptric components, having at the lower part and coinciding with two of its vertices, support pedestal stands (5) of anti-tilting nature, the sides (2) being articulated at its vertices, as well as fixing components between each other reducing its volume, **characterised in that** coinciding with the vertices of the triangle (1) formed by the union of the three sides (2), there are one or several electroboscopic lamps, supplied by batteries (4) incorporated in hermetic boxes located behind the signal (1), having a photovoltaic cell (6) connected to the batteries incorporated inside the hermetic protection boxes.

2. A foldable traffic signal, signalling incidents, and having luminous components, according to first claim, **characterised in that** the electroboscopic lamps transmit intermittent luminous flashes.
